# EUROPEAN PATENT SPECIFICATION

(11) **EP 3 395 768 B1**
(45) Date of publication and mention of the grant of the patent: **10.03.2021**
(21) Application number: 17168711.4
(22) Date of filing: 28.04.2017
(51) Int. Cl.: C02F 1/467, C02F 1/461

(54) **ELECTRODE ASSEMBLY, SYSTEM AND METHOD FOR INACTIVATING ORGANIC MATERIAL IN A FLOW OF WATER**
ELEKTRODENANORDNUNG, SYSTEM UND VERFAHREN ZUR INAKTIVIERUNG VON ORGANISCHEM MATERIAL IN EINEM WASSERSTROM
ENSEMBLE D'ÉLECTRODES, SYSTÈME ET PROCÉDÉ D'INACTIVATION DE MATIÈRE ORGANIQUE DANS UN ÉCOULEMENT D'EAU

(43) Date of publication of application: 31.10.2018
(73) Proprietor: National Oilwell Varco Norway AS, 4604 Kristiansand S (NO)
(72) Inventor: Varanko, Yury, 4042 Hafrsfjord (NO); Dirdal, Eirik, 4070 Randaberg (NO)
(74) Representative: Håmsø Patentbyrå AS

(56) References cited:
- US-A- 4 188 278
- US-A1- 2015 274 558
- US-A1- 2016 090 314

## Description

The invention relates to an electrolytic device for the production of short-lived free radicals, such as hydroxyl (OH-) radicals, chlorine dioxide, dissolved ozone, and hydrogen peroxide, with the aim of inactivating organic material from water in a water flow, before injection into a well. The invention also relates to a system for water treatment, wherein the system comprises said electrolytic device. Furthermore, the invention relates to a method for arranging said electrolytic device in a flow path.

By "inactivating organic material" is herein particularly meant to kill off microorganisms such as plankton, bacteria, protozoa and viruses present in a flow of water.

Electrochemical production of oxidants, such as free hydroxyl radicals, is well known and widely used in the water treatment industry with the purpose of inactivating organic material and thus disinfecting the water. It is known to use electrode meshes which are arranged perpendicularly to the water flow. It is a challenge that higher order oxidants are extremely reactive and will undergo a chemical reaction within nanoseconds after they are formed. It is therefore only the water which is close to the electrodes which will be treated by the free hydroxyl radicals.

Patent publication US 8080150 B2 shows an example of an electrolytic cell wherein the electrodes are arranged substantially perpendicularly to the water flow. The electrodes are arranged in pairs, one cathode and one anode, wherein the electrodes within each pair are arranged at a relatively small distance from each other. Disadvantages of arranging the electrodes perpendicularly to the water flow are that the water's residence time between the electrodes is short, and that the contact area between the water and the electrodes is limited. These disadvantages result in a treatment process which is not very efficient.

Patent publication US 2016/090314 discloses an electro-chemical filter apparatus for treatment of seawater, contaminated water or polluted water. The apparatus comprises electrodes arranged radially and concentrically with respect to an elongate hollow semi-permeable member. The apparatus comprises at least one anode and at least one cathode. The hollow semi-permeable member can also be an electrode.

Patent publication US 2015/274558 discloses an oxidation system and method in a UV reactor with L-shaped, planar electrodes.

The invention has for its object to remedy or to reduce at least one of the drawbacks of the prior art or at least to provide a useful alternative to prior art.

The object is achieved through features, which are specified in the description below and in the claims that follow.

The invention is defined by the independent patent claims. The dependent claims define advantageous embodiments of the invention.

In a first aspect the invention relates more particularly to an electrode assembly for inactivating organic material in water, the electrode assembly having a longitudinal axis, and comprising:
- at least one electrode unit comprising at least two electrodes whereof at least one anode and one cathode, wherein the electrodes comprise:
   - a first electrode member extending in a longitudinal direction of the electrode assembly and comprising a perforated portion for water to pass through; and
   - a second electrode member extending in the longitudinal direction of the electrode assembly and comprising a perforated portion for water to pass through;
wherein the first and second electrode members of the anode correspond to and are arranged in close proximity to the first and second electrode members of the cathode
wherein the second electrode member is connected to and arranged at an angle with respect to the first electrode member, so that the electrode members are arranged around the longitudinal axis, and the electrode members are inclined with respect to the longitudinal axis of the electrode assembly.

The electrode assembly is an electrolytic device which, when connected to a power supply, is able to produce free radicals, such as for instance hydroxyl (OH-) radicals. For treatment of water which is contaminated by organic material, the electrode assembly may be placed in a water flow, preferably in a confined space having an inlet opening and an outlet opening. The electrode assembly may preferably be oriented in such a way that the flow direction of the water flow upon entering the confined space through the inlet opening is substantially aligned with the longitudinal axis of the electrode assembly. The features that each electrode comprises a first electrode member and a second electrode member which are arranged at an angle with respect to the first electrode member, and which extend in the longitudinal direction of the electrode assembly provide a larger contact surface for the water to be treated. This solves the problem of the short contact time for electrodes arranged perpendicularly to the water flow.

In order to solve the problem of the short contact time/small contact surface, it is known from prior art to arrange solid, plate-shaped electrodes parallel to the water flow. An example of this is shown in US patent number 5419824. This solution provides longer residence time between the electrodes for the water to be treated, and the contact area is larger since the water flows along the electrodes. One challenge for this kind of arrangement is that there may be a considerable pressure drop in the water flow. Such pressure drop may lead to scale building up on the electrodes of the device due to precipitation, and thereby creating a significant restriction, or even a plug. The amount of precipitation is also affected by change in temperature, but as the temperature is quite stable through the relatively short device, pressure change constitutes the main contributor to precipitation.

The solution according to the invention reduces the pressure drop due to the perforated portions of the electrodes. In this manner the electrode assembly gets a large effective electrode area at the same time as it allows for high flow rate. High flow rate is an advantage when large volumes of water are to be treated.

The first and second electrode members may extend in the longitudinal direction of the longitudinal axis of the electrode assembly. By the term "extend in the longitudinal direction" as used herein, is meant that the extension of the electrode members is larger in the longitudinal direction of the electrode assembly, than in any other direction.

Each of the electrodes may comprise at least one further electrode member comprising a perforated portion. This is a possible embodiment of the electrode assembly.

The electrode members are inclined with respect to the longitudinal axis of the electrode assembly. If the electrode members are inclined with respect to the longitudinal axis of the electrode assembly, the water will hit the electrode members at different angles.

The electrode assembly is arranged to be placed in a flow of water, so that the water passes from a first end of the longitudinal axis of the electrode assembly and to a second end of the longitudinal axis of the electrode assembly. On its way through the electrode assembly, the water flow will obviously be disturbed by the electrode assembly and the flow direction of the water will therefore not be uniform. When water passes through the perforated portions of the electrode members it will get in contact with radicals produced between the anode and the cathode, and any organic material in the water will be inactivated. When the electrode members are tilted with regards to the longitudinal axis of the electrode assembly, it is possible to obtain a large contact area between the water and the electrode members at the same time as the pressure drop is reduced even further.

The electrode members of the anode and the electrode members of the cathode may be arranged substantially equidistant with regards to each other. This may for example be done by providing a spacer between the electrode members of the anode and the electrode members of the cathode, to ensure that the distance is at least substantially equal everywhere. The effect of having the same distance between the electrode members throughout the entire extension of the electrode members is that the treatment of the water will be more uniform and more predictable than if the distance varies. In an alternative embodiment, the spacer may be made with a varying thickness, so as to have a slightly changing distance between the electrodes over the electrode area.

The electrode members may preferably be arranged around the longitudinal axis of the electrode assembly. If the electrode members are inclined with regards to the longitudinal axis, this means that the electrode members at a first end are close to the longitudinal axis and at a second end are further away from the longitudinal axis. Therefore, it is advantageous if the electrode members, and in particular the perforated portion of the electrode members, are wider at the second end than they are at the first end. It would be even more advantageous if the width of the electrode members gradually increase from the first end to the second end. The electrode members may have the shape of trapeziums, or in particular isosceles trapeziums, but are not limited thereto. The electrode members may alternatively be for instance rectangles. The shape of the electrode members, and their optional growing contact surface from the first end to the second end, will influence on the efficiency of the water treatment. The larger the contact surface, the more efficient treatment. The electrode assembly may be placed in the water flow either so that water enters the more narrow part of the electrode assembly, i.e. where the electrode members are closest to the longitudinal axis, or so that water enters the wider part of the electrode assembly, i.e. where the electrode members are further away from the longitudinal axis of the electrode assembly.

The electrode members may be plate-shaped. This is a possible embodiment of the invention. Plate-shaped electrode members, in particular plate-shaped perforated portions of electrode members, are easy to produce and may easily be adapted to different geometrical shapes. However, the electrode members may alternatively be curved.

The electrode unit may comprise a further electrode. It would be a possible embodiment to provide three electrodes in a sandwich structure, i.e. an anode between two cathodes, since the free radicals are produced on the cathode, and two cathodes thus would provide more free radicals and consequently a more efficient treatment of the water passing through.

The electrode members of each electrode may be arranged so that they constitute a funnel-shaped electrode portion. It is an advantage if the electrode members are connected to each other such as to form a continuous structure through which water can flow. Such a continuous structure would be easier to install in a water flow, and it would provide better predictability of the treatment of the water, since all the water which is directed through the electrode assembly will be in contact with the electrode members.

The electrode assembly may preferably be arranged so in a water flow that all of the water has to pass through at least one of the perforated portions of the electrode members.

The electrode members of each electrode may alternatively be arranged so that they constitute the side walls of a prism. The prism may be an oblique prism, i.e. having side walls inclined with regards to the longitudinal axis of the electrode assembly.

The funnel-shaped electrode portion or the prism may have a polygonal base structure, such as trigonal, tetragonal, pentagonal, or hexagonal. These are possible embodiments of the invention.

However, if the electrode members are curved, also a circular or even oval shaped base structure is possible. The base structure is not necessarily limited to a regular shape, also an irregular shape is possible.

The electrode assembly may comprise a plurality of electrode units. Each electrode unit comprises at least two electrodes, one anode and one cathode, as described above. It is possible to provide a plurality of such electrode units in the electrode assembly, either along the same longitudinal axis, i.e. one after the other, or along different longitudinal axes.

The electrode units may be stackable on each other. This is a possible embodiment of the invention.

The electrode assembly may further comprise a tubular housing for enclosing the electrode unit(s) and for defining a flow path for the water to be treated.

The/each electrode unit may further comprise a base portion for connecting the electrodes to a power source. The base portion will be provided with an opening for letting the water flow through the base portion such as to get in contact with the electrodes. In the event that two or more electrode units are arranged along different longitudinal axes, it is preferable that they share the same base portion. The base portion may further be arranged to guide all of the water through the perforated portions of the electrodes.

The base portion may be shaped so that the circumference of the base portion substantially corresponds to the outer circumference of the tubular housing. This is a preferable embodiment of the invention because the base portion, with its opening, will guide the entire flow of water which is to be treated, through to the perforated portions of the electrode members, so that it will get in contact with the free radicals and any organic material will be inactivated.

The tubular housing may comprise of two parts which are connectable to each other, or to an intermediate element connectable to both parts. The base portion may then be such an intermediate element. The base portion may be arranged between the two parts of the tubular housing and connected thereto, so that the tubular housing, the base portion and the electrode members connected to the base portion, form one electrode assembly.

The perforated portions of the electrode members may comprise a mesh, either a fine mesh or a coarse mesh.

The electrode members may be provided with power distribution means. It may be preferable to distribute the power along the electrode members in order to provide a more even distribution compared to what is known in the art. Prior art power connection to an electrode is via one point. The idea with a power distribution means is to spread the power to at least two but possibly a plurality of connection points.

The power distribution means may be a slot provided on each electrode member for providing a short-cut for electricity from a point for connecting the electrode member to a power source and to at least two different locations on the perforated portion of the electrode member.

Also described herein is a power distribution means for the electrode assembly according to the first aspect of the invention, comprising a frame for being arranged around a perforated portion of an electrode member, wherein said frame is provided with a slot for providing a short-cut for electricity from a point for connecting the electrode member to a power source and to at least two different locations on the perforated portion of the electrode member.

In a second aspect the invention relates more particularly to a treatment system for water contaminated with organic material, wherein the treatment system comprises the electrode assembly according to the first aspect of the invention and the power distribution means of the kind described hereinabove. Such a treatment system may for instance be for treating injection water before injecting it into a wellbore.

In a third aspect the invention relates more particularly to a method for inactivating organic material in water, wherein the method comprises the following steps:
- providing a confined space having a longitudinal axis, an inlet opening and an outlet opening;
- arranging the electrode assembly according to the first aspect of the invention in the confined space, so that the longitudinal axis of the electrode assembly is aligned with the longitudinal axis of the confined space; and
- letting the water in through the inlet opening, through the electrode assembly in the confined space, and out through the outlet opening.

In the following are described examples of preferred embodiments illustrated in the accompanying drawings, wherein:
- Fig. 1: shows an electrode assembly according to the invention;
- Fig.2: shows an electrode assembly according to the invention;
- Figs. 3a-3d: shows examples of possible embodiments of the electrode assembly;
- Figs. 3e-3f: shows another possible electrode assembly not part of the invention;
- Fig.4: shows an electrode member of an anode and of a cathode;
- Fig. 5: shows an exploded view of an electrode assembly;
- Fig. 6: is a cross sectional view of an electrode assembly comprising a power supply;
- Fig. 7: is a cross sectional view of an electrode assembly comprising a power supply; and
- Fig. 8a-b: shows a system for water treatment.

The figures are shown in a simplified and schematic manner, and details that are not important in order to highlight what is new about the invention may have been omitted from the figures. The various elements in the figures are not necessarily shown to scale relative to each other. Like or corresponding elements will be indicated by the same reference numeral in the figures.

Any positional specifications such as "over", "under", "above", "below", "left" and "right" reflect the position shown in the figures.

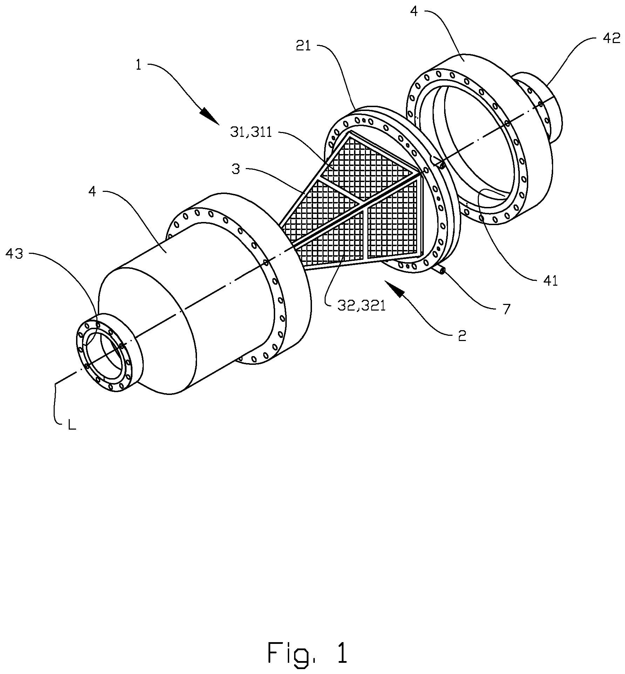

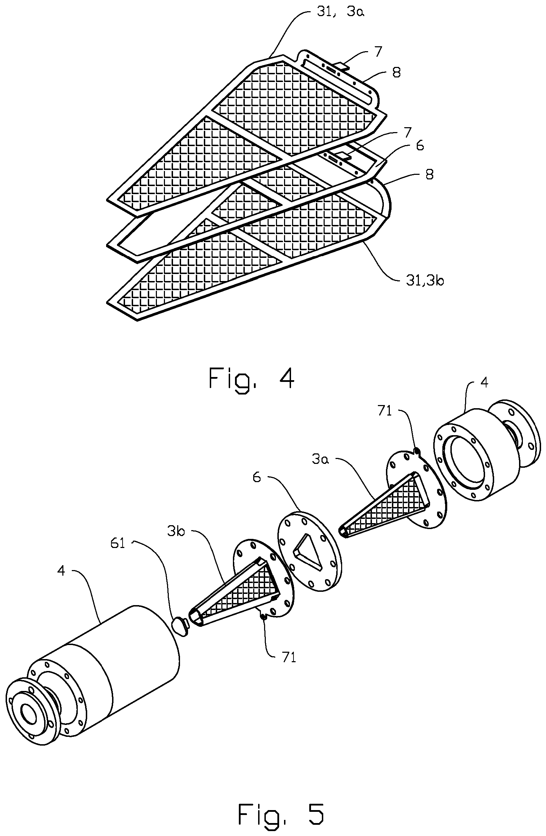

Reference is first made to Figure 1 which shows an electrode assembly 1 having a longitudinal axis L. The electrode assembly 1 is here shown before it is completely assembled. A tubular housing 4 is shown as two parts not yet assembled. An electrode unit 2 is arranged between the two parts of the tubular housing 4. The electrode unit 2 comprises a base portion 21 which is here shown in a shape and size adapted to be sandwiched between, and connected to, the two parts of the tubular housing 4. The electrode unit 2 further comprises electrodes 3, whereof in figure 1 only one is visible, as two electrodes 3, an anode 3a and a cathode 3b (see figures 4 and 5) are arranged one covering the other. The electrodes 3 consist of at least two electrode members 31, 32 each. In figure 1 only two electrode members 31, 32 are visible, each comprising perforated portions 311, 321 for water to pass through. The electrode members 31, 32 are connected to the base portion 21. A not shown power source may be connected to the base portion 21 in order to provide the electrodes 3 with electricity so that free radicals may be formed.

The tubular housing 4 encloses a confined space 41, and it is provided with an inlet opening 42 and an outlet opening 43. The electrode assembly 1 may be oriented the opposite way in a flow of water, meaning that the inlet opening 42 could instead be the outlet opening, and the outlet opening 43 could instead be the inlet opening.

The electrode members 31, 32 are inclined with regards to the longitudinal axis L, and here they are shown connected to each other.

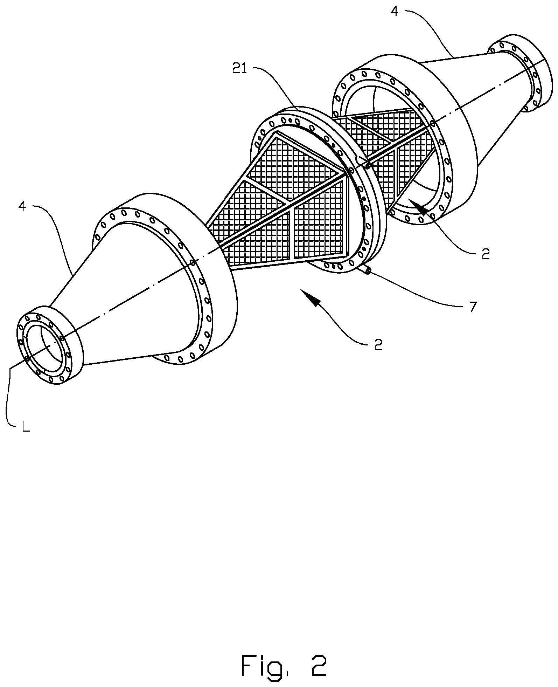

In figure 2 two electrode units 2 are shown. The electrode units 2 are arranged opposite of each other, sharing the same base portion 21. The shape of the tubular housing 4 is altered such as to house both electrode units 2. It must be understood that the shown geometrical shapes of both the housing 4 and of the electrode units 2 are only exemplary. Many different shapes are possible. Also electrode units 2 may be stacked upon each other instead of, or in addition to, electrode units 2 sharing base portion 21. One electrode assembly 1 may have a plurality of electrode units 2.

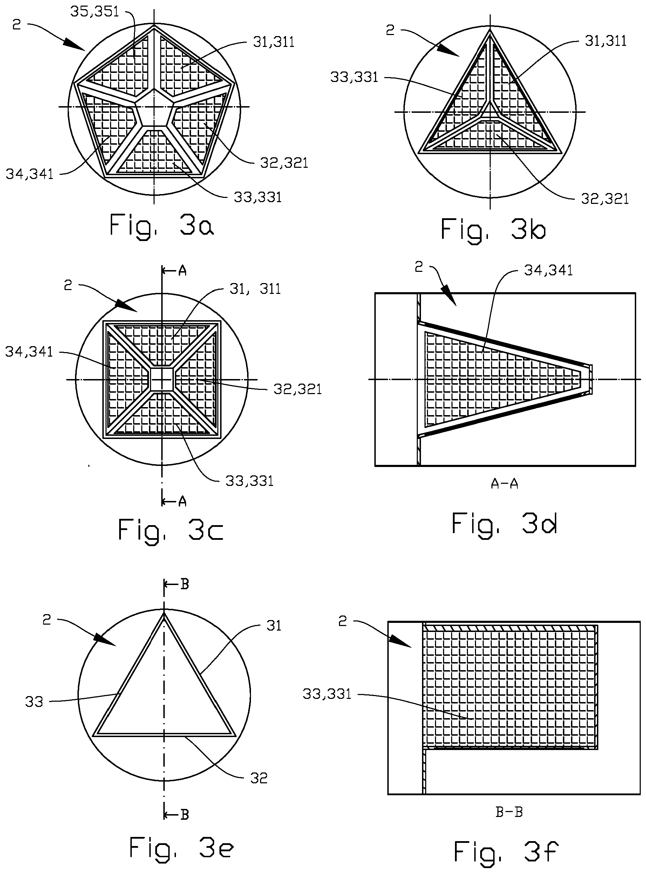

In Figures 3a, 3b, 3c and 3e are shown different possible base structures of the electrode units 2. Figure 3a shows an electrode unit 2 with a pentagonal base structure. The electrode unit 2 is seen from above. This embodiment of the electrode unit 2 is constituted by five electrode members 31, 32, 33, 34, 35, each having a perforated portion 311, 321, 331, 341, 351. Similarly figure 3b shows an electrode unit 2 having a trigonal base structure, thus having three electrode members 31, 32, 33 each having a perforated portion 311, 321, 331. In figure 3c the base structure is tetragonal, with electrode members 31, 32, 33, 34 and corresponding perforated portions 311, 321, 331, 341. Figure 3d shows the cross section through the line A-A in figure 3c, where electrode member 34 with perforated portion 341 can be seen in the figure. Figure 3e shows a three-sided prismatic embodiment of an electrode unit which does not form part of the invention, wherein the electrode members 31, 32, 33 will be non-inclined with respect to the longitudinal axis L of the electrode assembly when installed therein. Figure 3f shows a cross-section seen through the line B-B from figure 3e, where the electrode member 33 and corresponding mesh 331 can be seen in the figure.

In figure 4 an electrode member 31 of an anode 3a and an electrode member 31 of a cathode 3b are shown in a sandwich structure with a spacer element 6 between the electrode members 31. The purpose of the spacer element 6 is to keep the two electrode members 31 equidistant to each other. Each electrode member is provided with a connecting means 7 for connecting to a power source. Said connecting means 7 is transferring power to the perforated portion 311 of the electrode member 31. Preferably, as shown here, the connecting means 7 is transferring the power via a power distribution means 8. The power distribution means 8 distributes the power from the connecting means 7 to at least two locations of the edge of the perforated portion 311.

Figure 5 shows an embodiment of the electrode assembly 1 in an exploded view. Here the anode 3a and the cathode 3b are shown as trigonal funnel-shaped structures, stackable on each other. The spacer element 6 is here shown as a circular disc with an opening provided therein for receiving the trigonal funnel-shaped portion of the anode 3a and a cap 61 keeping the narrow ends of the electrodes 3a, 3b at fixed position relative to each other and closing the narrow end of the funnels-shaped structure. The connection means 7 of both the anode 3a and the cathode 3b are here shown as ears 71 which, when the embodiment is assembled, will extend on the outside of the tubular housing 4 for easy connection to a power source.

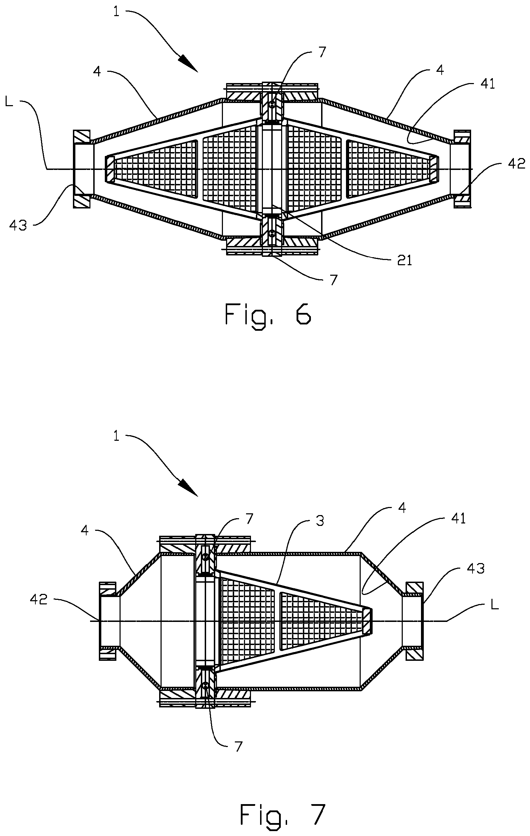

Figure 6 shows an embodiment of the electrode assembly 1 wherein two electrode units 2 are provided. The electrode units 2 are arranged opposite of each other, i.e. they have a common base portion 21.

Figure 7 is a cross-section through the assembled version of the electrode assembly 1 shown in figure 1. The electrodes 3 are provided within the confined space 41 of the tubular housing 4, and the flow direction may be either way through the confined space 41. That means that the inlet opening 42 could alternatively be the outlet opening, and the outlet opening 43 could alternatively be the inlet opening. The the connection means 7 extend on the outside of the tubular housing 4.

Other embodiments, for instance an embodiment wherein two or more electrode units 2 are stacked on each other, would also be possible. Or a combination, wherein for instance another electrode unit 2 were stacked upon one of the electrode units 2 of Figure 7, would also be possible.

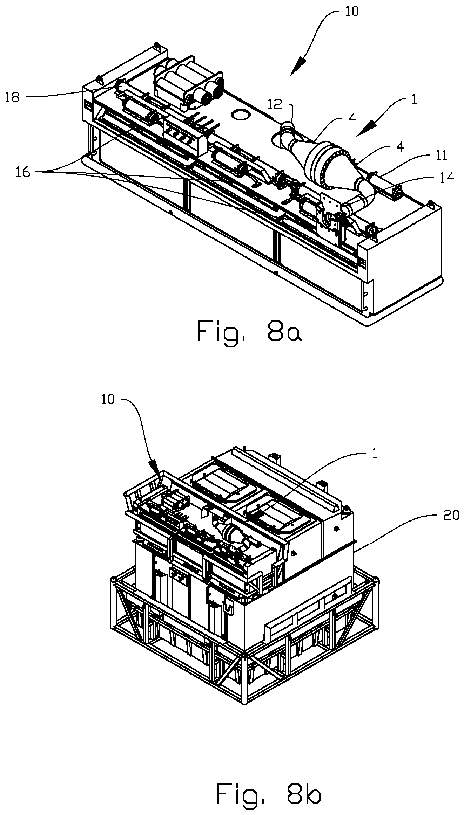

Figure 8a shows a water treatment system 10 comprising the electrode assembly 1 described herein. The tubular housing 4 is provided between two pipelines, an inlet 12 and an outlet 14, such as to provide a continuous flow path for water to be treated by the water treatment system 10. The system 10 may comprise a plurality of different treatment units where the electrode assembly 1 for electrolytic treatment of the water constitutes one of the treatment units. The electrode assembly 1 is here shown connected to a power source 11 for providing power to the base portions 21 of the electrode units 2 of the electrode assembly 1, as indicated in figures 1 and 2. Other treatment units may be typically connected to the electrode assembly 1 upstream of the inlet, while a not shown injection well may be connected to the system 10 downstream of the electrode assembly 1. In other embodiment further treatment units may also be provided downstream of the electrode assembly. In the shown embodiment, the system 10 is further provided with a plurality of cells 16 for electro-chlorination of seawater powered by a power source 18, the cells constituting one example of such additional treatment units.

In figure 8b the system 10 is shown in an exemplary position of use, where it provided together with large container 20 for gravitational precipitation of particles from seawater, where the container is provided upstream of the electrode assembly in the shown embodiment. Further details about the container 20 can *e.g*. be found in WO 2007/035106 A1 to which reference is made for a more in-depth description of this technology.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Electrode assembly (1) for inactivating organic material in water, the electrode assembly (1) having a longitudinal axis (L), and comprising:
- at least one electrode unit (2), comprising at least two electrodes (3) whereof at least one anode (3a) and one cathode (3b), wherein the electrodes (3) comprise:
- a first electrode member (31) extending in a longitudinal direction of the electrode assembly (1) and comprising a perforated portion (311) for water to pass through; and
- a second electrode member (32) extending in the longitudinal direction of the electrode assembly (1) and comprising a perforated portion (321) for water to pass through;
wherein the first and second electrode members (31, 32) of the anode (3a) correspond to and are arranged in close proximity to the first and second electrode members (31, 32) of the cathode (3b)
**characterised in that** the second electrode member (32) is connected to and arranged at an angle with respect to the first electrode member (31), so that the electrode members (31, 32) are arranged around the longitudinal axis (L), and the electrode members (31, 32) are inclined with respect to the longitudinal axis (L) of the electrode assembly.

2. Electrode assembly (1) according to claim 1, wherein each of the electrodes (3) comprises at least one further electrode member (33) comprising a perforated portion (331).

3. Electrode assembly (1) according to any one of the preceding claims, wherein the electrode members (31, 32, 33) of the anode (3a) and the electrode members (31, 32, 33) of the cathode (3b) are arranged substantially equidistant with regards to each other.

4. Electrode assembly (1) according to any one of the preceding claims, wherein the electrode members (31, 32, 33) are plate-shaped.

5. Electrode assembly (1) according to any one of claims 1-3, wherein the electrode members (31, 32, 33) are curved.

6. Electrode assembly (1) according to any one of the preceding claims, wherein the electrode unit (2) comprises a further electrode (3).

7. Electrode assembly (1) according to claim 2, or any one of claims 3-6 in so far as dependent on claim 2, wherein the electrode members (31, 32, 33) of each electrode (3) are arranged such that they constitute a funnel-shaped electrode portion.

8. Electrode assembly (1) according to claim 2 or any one of claims 3-6 in so far as dependent on claim 2, wherein the electrode members (31, 32, 33) of each electrode (3) are arranged such that they constitute the side walls of a prism.

9. Electrode assembly (1) according to claim 7 or 8, wherein the funnel-shaped electrode portion or the prism has a polygonal base structure, such as trigonal, tetragonal, pentagonal, or hexagonal.

10. Electrode assembly (1) according to any one of the preceding claims, comprising a plurality of electrode units (2).

11. Electrode assembly (1) according to claim 10 in so far as dependent on claim 7, wherein the electrode units (2) are stackable on each other.

12. Electrode assembly (1) according to any one of the preceding claims, further comprising a tubular housing (4) for enclosing the electrode unit(s) (2) and for defining a flow path for the water to be treated.

13. Electrode assembly (1) according to any one of the preceding claims, wherein the electrode unit (2) further comprises a base portion (21) for connecting the electrodes (3) to a power source.

14. Electrode assembly (1) according to claim 13 in so far as dependent on claim 12, wherein the base portion (21) is shaped such that the circumference of the base portion (21) substantially corresponds to the outer circumference of the tubular housing (4).

15. Electrode assembly (1) according to any one of the preceding claims, wherein the perforated portions (311, 321, 331) of the electrode members (31, 32, 33) comprise a mesh.

16. Electrode assembly (1) according to any one of the preceding claims, wherein the electrode members (31, 32, 33) are provided with power distribution means (5).

17. Electrode assembly (1) according to claim 16, wherein the power distribution means (5) is a slot provided on each electrode member (31, 32, 33) for providing a short-cut for electricity from a point for connecting the electrode member (31, 32, 33) to a power source and to at least two different locations on the perforated portion (311, 321, 331) of the electrode member (31, 32, 33).

18. Treatment system (10) for water contaminated with organic material, wherein the treatment system (10) comprises the electrode assembly (1) according to any one of claims 1-17, further comprising a power distribution means (5) comprising a frame (51) for being arranged around the perforated portion (311, 321, 331) of the electrode member (31, 32, 33), wherein said frame (51) is provided with a slot for providing a short-cut for electricity from a point for connecting the electrode member (31, 32, 33) to a power source and to at least two different locations on the perforated portion (311, 321, 331) of the electrode member (31, 32, 33).

19. Method for inactivating organic material in water, wherein the method comprises the following steps:
- providing a confined space (41) having a longitudinal axis, an inlet opening (42) and an outlet opening (43);
- arranging an electrode assembly (1) according to claim 1 in the confined space (41), such that the longitudinal axis (L) of the electrode assembly (1) is aligned with the longitudinal axis of the confined space (41);
- connecting the electrode assembly (1) to a power source (11); and- letting the water in through the inlet opening (42), through the electrode assembly (1) in the confined space (41), and out through the outlet opening (43).

## Patentansprüche

1. Elektronenanordnung (1) zur Inaktivierung von organischem Material in Wasser, wobei die Elektrodenanordnung (1) eine Längsachse (L) aufweist und ferner aufweist:
- mindestens eine Elektrodeneinheit (2), aufweisend mindestens zwei Elektroden (3), davon mindestens eine Anode (3a) und eine Kathode (3b), wobei die Elektroden (3) aufweisen:
∘ ein erstes Elektrodenglied (31), welches sich in einer Längsrichtung der Elektronenanordnung (1) erstreckt und einen perforierten Anteil (311) für den Durchtritt von Wasser aufweist; und
∘ ein zweites Elektrodenglied (32), welches sich in der Längsrichtung der Elektronenanordnung (1) erstreckt, und einen perforierten Anteil (321) für den Durchtritt von Wasser aufweist;
- wobei das erste und das zweite Elektrodenglied (31,32) der Anode (3a) mit dem ersten und zweiten Elektrodenglied (31, 32) der Kathode (3b) korrespondieren und in naher Umgebung dazu angeordnet sind,
- **dadurch gekennzeichnet, dass** das zweite Elektrodenglied (32) mit dem ersten Elektrodenglied (31) verbunden ist und in einem Winkel dazu angeordnet ist, sodass die Elektrodenglieder (31, 32) um die Längsachse (L) herum angeordnet sind, und die Elektrodenglieder (31, 32) in Bezug auf die Längsachse (L) der Elektrodenanordnung geneigt sind.

2. Elektrodenanordnung (1) gemäss Anspruch 1, wobei jede der Elektroden (3) mindestens ein weiteres Elektrodenglied (33) aufweist, welches einen perforierten Anteil (331) aufweist.

3. Elektrodenanordnung (1) gemäss einem der vorhergehenden Ansprüche, wobei die Elektrodenglieder (31, 32, 33) der Anode (3a) und die Elektrodenglieder (31, 32, 33) der Kathode (3b) im Wesentlichen in gleichmässigen Abständen zueinander angeordnet sind.

4. Elektrodenanordnung (1) gemäss einem der vorhergehenden Ansprüche, wobei die Elektrodenglieder (31, 32, 33) tellerförmig sind.

5. Elektrodenanordnung (1) gemäss einem der Ansprüche 1-3, wobei die Elektrodenglieder (31, 32, 33) gekrümmt sind.

6. Elektrodenanordnung (1) gemäss einem der vorhergehenden Ansprüche, wobei die Elektrodeneinheit (2) eine weitere Elektrode (3) aufweist.

7. Elektrodenanordnung (1) gemäss Anspruch 2, oder einem der Ansprüche 3-6 in Abhängigkeit von Anspruch 2, wobei die Elektrodenglieder (31, 32, 33) jeder Elektrode (3) derart angeordnet sind, dass sie einen trichterförmigen Elektrodenanteil bilden.

8. Elektrodenanordnung (1) gemäss Anspruch 2 oder einem der Ansprüche 3-6 in Abhängigkeit von Anspruch 2, wobei die Elektrodenglieder (31, 32, 33) jeder Elektrode (3) derart angeordnet sind, dass sie die Seitenwände eines Prismas bilden.

9. Elektrodenanordnung (1) gemäss Anspruch 7 oder 8, wobei der trichterförmige Elektrodenanteil oder das Prisma eine polygonale Grundstruktur aufweist, wie beispielsweise eine dreieckige, viereckige, fünfeckige oder sechseckige.

10. Elektrodenanordnung (1) gemäss einem dervorhergehenden Ansprüche, aufweisend eine Vielzahl von Elektrodeneinheiten (2).

11. Elektrodenanordnung (1) gemäss Anspruch 10 in Abhängigkeit von Anspruch 7, wobei die Elektrodeneinheiten (2) aufeinander stapelbar sind.

12. Elektrodenanordnung (1) gemäss einem der vorhergehenden Ansprüche, ferner aufweisend ein rohrförmiges Gehäuse (4) zur Umschliessung der Elektrodeneinheit(en) (2) und zur Definierung eines Strömungswegs für das zu behandelnde Wasser.

13. Elektrodenanordnung (1) gemäss einem der vorhergehenden Ansprüche, wobei die Elektrodeneinheit (2) ferner ein Unterteil (21) zum Anschliessen der Elektroden (3) an eine Stromquelle aufweist.

14. Elektrodenanordnung (1) gemäss Anspruch 13 in Abhängigkeit von Anspruch 12, wobei das Unterteil (21) derart geformt ist, dass der Umfang des Unterteils (21) im Wesentlichen dem äusseren Umfang des rohrförmigen Gehäuses (4) entspricht.

15. Elektrodenanordnung (1) gemäss einem dervorhergehenden Ansprüche, wobei die perforierten Anteile (311, 321, 331) der Elektrodenglieder (31, 32, 33) eine Netzstruktur aufweisen.

16. Elektrodenanordnung (1) gemäss einem der vorhergehenden Ansprüche, wobei die Elektrodenglieder (31, 32, 33) mit Stromverteilermitteln (5) ausgestattet sind.

17. Elektrodenanordnung (1) gemäss Anspruch 16, wobei die Stromverteilermittel (5) ein Schlitz sind, welcher auf jedem Elektrodenglied (31, 32, 33) angeordnet ist zur Verfügungstellung einer Abkürzung für Elektrizität von einem Punkt zur Verbindung des Elektrodenglieds (31, 32, 33) mit einer Stromquelle und mit mindestens zwei unterschiedlichen Stellen auf dem perforierten Anteil (311, 321, 331) des Elektrodenglieds (31, 32, 33).

18. Behandlungssystem (10) für mit organischem Material kontaminiertes Wasser, wobei das Behandlungssystem (10) die Elektrodenanordnung (1) gemäss einem der Ansprüche 1-17 aufweist, femer aufweisend ein Stromverteilermittel (5) aufweisend einen Rahmen (51) zur Anordnung um den perforierten Anteil (311, 321, 331) des Elektrodenglieds (31, 32, 33) herum, wobei der besagte Rahmen (51) mit einem Schlitz ausgestattet ist zur Verfügungstellung einer Abkürzung für Elektrizität von einem Punkt zur Verbindung des Elektrodenglieds (31, 32, 33) mit einer Stromquelle und mit mindestens zwei unterschiedlichen Stellen auf dem perforierten Anteil (311, 321, 331) des Elektrodenglieds (31, 32, 33).

19. Verfahren zur Inaktivierung von organischem Material in Wasser, wobei das Verfahren die folgenden Schritte beinhaltet:
- zur Verfügungstellen eines engen Raums (41) mit einer Längsachse, einer Eintrittsöffnung (42) und einer Austrittsöffnung (43);
- Anordnen einer Elektrodenanordnung (1) gemäss Anspruch 1 in dem engen Raum (41), sodass die Längsachse (L) der Elektrodenanordnung (1) mit der Längsachse des engen Raums (41) fluchtet;
- Anschliessen der Elektrodenanordnung (1) an eine Stromquelle (11); und Einlassen des Wassers durch die Eintrittsöffnung (42), durch die Elektrodenanordnung (1) hindurch in den engen Raum (41) hinein und Hinauslassen des Wassers aus derAustrittsöffnung (43).

## Revendications

1. Ensemble d'électrodes (1) pour inactiver une matière organique dans l'eau, l'ensemble d'électrodes (1) ayant un axe longitudinal (L), et comprenant:
- au moins une unité d'électrodes (2), comprenant au moins deux électrodes (3) dont au moins une anode (3a) et une cathode (3b), dans lequel les électrodes (3) comprennent:
- un premier élément d'électrode (31) s'étendant dans une direction longitudinale de l'ensemble d'électrodes (1) et comprenant une partie perforée (311) pour le passage de l'eau; et
- un deuxième élément d'électrode (32) s'étendant dans une direction longitudinale de l'ensemble d'électrodes (1) et comprenant une partie perforée (321) pour le passage de l'eau ;
dans lequel les premier et second éléments d'électrode (31, 32) de l'anode (3a) correspondent aux et sont disposés à proximité immédiate des premier et second éléments d'électrode (31, 32) de la cathode (3b), **caractérisé en ce que** le second élément d'électrode (32) est connecté à et disposé à un angle par rapport au premier élément d'électrode (31), de sorte que les éléments d'électrode (31, 32) sont agencés autour de l'axe longitudinal (L), et les éléments d'électrodes (31, 32) sont inclinés par rapport à l'axe longitudinal (L) de l'ensemble d'électrodes.

2. Ensemble d'électrodes (1) selon la revendication 1, dans lequel chacune des électrodes (3) comprend au moins un autre élément d'électrode (33) comprenant une partie perforée (331).

3. Ensemble d'électrodes (1) selon l'une quelconque des revendications précédentes, dans lequel les éléments d'électrode (31, 32, 33) de l'anode (3a) et les éléments d'électrode (31, 32, 33) de la cathode (3b) sont agencés sensiblement équidistants les uns par rapport aux autres.

4. Ensemble d'électrodes (1) selon l'une quelconque des revendications précédentes, dans lequel les éléments d'électrode (31, 32, 33) sont en forme de plaque.

5. Ensemble d'électrodes (1) selon l'une quelconque des revendications 1 à 3, dans lequel les éléments d'électrode (31, 32, 33) sont incurvés.

6. Ensemble d'électrodes (1) selon l'une quelconque des revendications précédentes, dans lequel l'unité d'électrode (2) comprend une autre électrode (3).

7. Ensemble d'électrodes (1) selon la revendication 2, ou l'une quelconque des revendications 3 à 6 dans la mesure où elle dépend de la revendication 2, dans lequel les éléments d'électrode (31, 32, 33) de chaque électrode (3) sont agencés de telle sorte qu'ils constituent une partie d'électrode en forme d'entonnoir.

8. Ensemble d'électrodes (1) selon la revendication 2 ou l'une quelconque des revendications 3 à 6 dans la mesure où elle dépend de la revendication 2, dans lequel les éléments d'électrode (31, 32, 33) de chaque électrode (3) sont disposés de telle sorte qu'ils constituent le parois latérales d'un prisme.

9. Ensemble d'électrodes (1) selon la revendication 7 ou 8, dans lequel la partie d'électrode en forme d'entonnoir ou le prisme a une structure de base polygonale, telle que trigonale, tétragonale, pentagonale ou hexagonale.

10. Ensemble d'électrodes (1) selon l'une quelconque des revendications précédentes, comprenant une pluralité d'unités d'électrodes (2).

11. Ensemble d'électrodes (1) selon la revendication 10 dans la mesure où elle dépend de la revendication 7, dans lequel les unités d'électrodes (2) sont empilables les unes sur les autres.

12. Ensemble d'électrode (1) selon l'une quelconque des revendications précédentes, comprenant en outre un boîtier tubulaire (4) pour renfermer la ou les unité(s) d'électrode (2) et pour définir un trajet d'écoulement pour l'eau à traiter.

13. Ensemble d'électrodes (1) selon l'une quelconque des revendications précédentes, dans lequel l'unité d'électrodes (2) comprend en outre une partie de base (21) pour connecter les électrodes (3) à une source d'alimentation.

14. Ensemble d'électrodes (1) selon la revendication 13 dans la mesure où elle dépend de la revendication 12, dans lequel la partie de base (21) est formée de telle sorte que la circonférence de la partie de base (21) correspond sensiblement à la circonférence extérieure du boîtier tubulaire (4).

15. Ensemble d'électrodes (1) selon l'une quelconque des revendications précédentes, dans lequel les parties perforées (311, 321, 331) des éléments d'électrode (31, 32, 33) comprennent un treillis.

16. Ensemble d'électrode (1) selon l'une quelconque des revendications précédentes, dans lequel les éléments d'électrode (31, 32, 33) sont pourvus de moyens de distribution d'énergie (5).

17. Ensemble d'électrode (1) selon la revendication 16, dans lequel le moyen de distribution d'énergie (5) est une fente prévue sur chaque élément d'électrode (31, 32, 33) pour fournir un raccourci pour l'électricité à partir d'un point pour connecter l'élément d'électrode (31, 32, 33) à une source d'alimentation et à au moins deux emplacements différents sur la partie perforée (311, 321, 331) de l'élément d'électrode (31, 32, 33).

18. Système de traitement (10) pour de l'eau contaminée avec une matière organique, dans lequel le système de traitement (10) comprend l'ensemble d'électrodes (1) selon l'une quelconque des revendications 1 à 17, comprenant en outre un moyen de distribution d'énergie (5) comprenant un cadre (51) pour être disposé autour d'une partie perforée (311, 321, 331) de l'élément d'électrode (31, 32, 33), à dans lequel ledit cadre (51) est pourvu d'une fente pour fournir un raccourci pour l'électricité à partir d'un point pour connecter l'élément d'électrode (31, 32, 33) à une source d'alimentation et à au moins deux emplacements différents sur la partie perforée (311, 321, 331) de l'élément d'électrode (31, 32, 33).

19. Procédé pour inactiver une matière organique dans de l'eau, dans lequel le procédé comprend les étapes suivantes:
- fournir un espace confiné (41) ayant un axe longitudinal, une ouverture d'entrée (42) et une ouverture de sortie (43);
- disposer un ensemble d'électrodes (1) selon la revendication 1 dans l'espace confiné (41), de telle sorte que l'axe longitudinal (L) de l'ensemble d'électrodes (1) soit aligné avec l'axe longitudinal de l'espace confiné (41);
- connecter l'ensemble d'électrodes (1) à une source d'alimentation (11); et
- laisser entrer l'eau à travers l'ouverture d'entrée (42), à travers l'ensemble d'électrodes (1) dans l'espace confiné (41), et sortir à travers l'ouverture de sortie (43).
